# EUROPÄISCHE PATENTSCHRIFT

(11) **EP 1 393 981 B1**
(45) Veröffentlichungstag und Bekanntmachung des Hinweises auf die Patenterteilung: **17.05.2006**
(21) Anmeldenummer: 03019450.0
(22) Anmeldetag: 28.08.2003
(51) Int. Cl.: B60R 13/04, B60R 9/058, B60R 13/02

(54) **Mechanische Verbindungsklammer**
Mechanical attachment clamp
Attache mécanique à pinces

(30) Priorität: 30.08.2002 DE 10239911
(43) Veröffentlichungstag der Anmeldung: 03.03.2004
(73) Patentinhaber: WKW Erbslöh Automotive GmbH, 42349 Wuppertal (DE)
(72) Erfinder: Bamberg, Klaus, 58256 Ennepetal (DE)
(74) Vertreter: Sparing, Rolf Klaus

(56) Entgegenhaltungen:
- DE-C- 3 230 317
- US-A- 5 464 299
- PATENT ABSTRACTS OF JAPAN vol. 1997, no. 09, 30. September 1997 (1997-09-30) & JP 09 118131 A (SUZUKI MOTOR CORP), 6. Mai 1997 (1997-05-06)
- PATENT ABSTRACTS OF JAPAN vol. 2000, no. 19, 5. Juni 2001 (2001-06-05) & JP 2001 030755 A (KASAI KOGYO CO LTD), 6. Februar 2001 (2001-02-06)

## Beschreibung

Die vorliegende Erfindung betrifft eine mechanische Verbindungsklammer in Form einer Keilklammer zur Verbindung von zwei Profilstücken an deren stirnseitigen Stoßflächen. Als Profilstücke kommen vorzugsweise Zier- und Funktionsleisten im Automobilbau in Betracht.

Bei Kraftfahrzeugen werden häufig verschiedene Zier- und Funktionsleisten auf der Außenseite der Karosserie angebracht. Beispielsweise kommen wasserabweisende Leisten an der Frontscheibe zum Einsatz, welche in der Verlängerung in Dachzierleisten überführt werden.

Die an ihren stirnseitigen Stoßflächen angrenzenden Leisten werden oftmals mechanisch nicht verbunden, sondern nur mit einer Endkappe abgedichtet. Nachteilig hierbei ist, dass ein unerwünschter Höhenversatz der Leisten am Fahrzeug wahrscheinlich ist.

Um dies zu vermeiden, müssen die Zier- und Funktionsleisten mechanisch verbunden werden. Hierzu ist im Automobilbau bekannt, die an ihren stirnseitigen Stoßflächen angrenzenden Zier- und Funktionsleisten durch eine Verbindungslasche mechanisch zu verbinden, indem die Lasche mit den zu verbindenden Leisten verprägt wird. Bei dem technisch aufwändigen Verprägen der Leisten besteht jedoch stets die Gefahr einer Oberflächenbeschädigung der Leisten, sowie einer Spaltbildung an den stirnseitigen Stoßflächen, da die Stoßflächen bei dieser Art von Befestigung nicht gegeneinander verklemmt werden. Eine solche Verbindung ist darüber hinaus nicht sonderlich stabil, da ein gutes Flächenmoment gegen Durchbiegung im allgemeinen nicht gewährleistet ist. Ferner muss auch das Material der Profilstücke geeignet gewählt werden, um ein Verprägen der Lasche überhaupt zu ermöglichen, so dass zudem Einschränkungen hinsichtlich des Materials für die Profilstücke bestehen. In logistischer Hinsicht hat das Verprägen von Profilstücken mit einer Lasche den Nachteil, dass wenigstens drei verschiedene Bauteile in das Montagewerk geliefert werden müssen, was zusätzliche Kosten für Transport und Lagerhaltung verursacht.

DE 19947762 A1 zeigt eine Einrichtung zur Befestigung eines Baulements in einer Rinne, bei welchem zwei nichtflächige Spannkeile in der Rinne verspannt werden. Eine solche Einrichtung ist zur Verbindung von zwei Profilstücken an den stirnseitigen Stoßflächen nicht geeignet

US-A-5464299 zeigt eine Einrichtung zur Befestigung ein hohles Profilstück an einer saüle, bei welcher zwei Spannkeile durch eine in der saüle einschraubende Gewindestange Verspannt werden. Diese Einrichtung ist zur Verbindung von zwei Profilstücken an den stirnseitigen stoßflächen auch nicht geeignet.

DE 19521862 A1 zeigt eine Befestigungsvorrichtung für eine Zier- bzw. Abdeckleiste für einen Spalt, bei welcher zwei nichtflächige Spannteile in dem Spalt verspannt werden.

DE 3301413 A1 zeigt eine Vorrichtung zur Befestigung eines Dachgepäckträgers und dergleichen auf einem Fahrzeugdach, bei welcher ein nichtflächiges Klemmstück in einer Rinne verspannt wird.

DE 3110989 A1 zeigt eine Befestigungsvorrichtung für eine Zier- bzw. Abdeckleiste, bei welcher ein zweiteiliger nichtflächiger Haltekörper in einem Spalt verspannt wird.

Erfindungsgemäß ist eine Keilklammer zur Verbindung von zwei Profilstücken an deren stirnseitigen Stoßflächen gemäß den Merkmalen von Anspruch 1 gezeigt. Das erste Klammerelement und das zweite Klammerelement weisen jeweils eine Keilfläche auf, wobei die beiden Keilflächen einander zugewandt sind, ineinander passen und gefügt werden können. An den beiden Klammerelementen sind ferner jeweils Spreizteile ausgebildet, wobei ein Spreizteil eines Klammerelements der Keilfläche dieses Klammerelements gegenüberliegt.

Erfindungsgemäß sind die beiden Klammerelemente durch Verkeilen, d. h. zunehmendes Fügen der beiden Keilflächen, mit ihren Spreizteilen in Taschen der beiden zu verbindenden Profilstükken verspannbar, wobei die Klammerelemente die stirnseitigen Stoßflächen der beiden Profilstücke überbrücken.

Mit anderen Worten, mit dem zunehmenden Fügen der einander zugewandten Keilflächen der beiden Klammerelemente vergrößert die Keilklammer aufgrund der zunehmenden Konizität der beiden Keilflächen ihre Abmessung in einer Richtung quer zur Fügerichtung und kann mit den jeweils außenliegenden Spreizteilen in den beiden Profilstücken verspannt werden, wobei die Keilklammer die stirnseitigen Stoßflächen der beiden Profilstücke zur Verbindung der Profilstücke überbrückt.

Die Profilstücke können durch die erfindungsgemäße Keilklammer auf nur einer Seite, d. h. einer "Montageseite", verklammert werden, während eine dieser gegenüberliegende "Dekorationsseite" unbeeinträchtigt bleibt.

Eine derartige Verbindung ist außerordentlich stabil, gewährleistet ein hohes Flächenmoment gegen Durchbiegung, und verklemmt vorteilhaft die stirnseitigen Stoßflächen gegeneinander, da die beiden Klammerelemente in einer Richtung quer zu den stirnseitigen Stoßflächen der Profilstücke gefügt werden. Ein unerwünschter Höhenversatz der beiden Profilstücke wird durch die erfindungsgemäße Keilklammer stets vermieden.

Die erfindungsgemäße Keilklammer kann sehr vorteilhaft auch zur Verklammerung von zwei geometrisch unterschiedlichen Profilstücken dienen, solange gewährleistet ist, dass die Keilklammer in den Profilstücken verspannt werden kann.

Durch die erfindungsgemäße Keilklammer können zwei verschiedenen Profilstücke in sehr einfacher Weise zu einem einstückigen Bauteil verklammert werden, wobei die Profilstücke aus einem gänzlich verschiedenen Material gefertigt sein können. Insbesondere kann für eines oder beide der Profilstücke ein Material verwendet werden, welches sich für ein herkömmliches Verprägen mit einer Lasche nicht eignet.

Eine Verbindung der Profilstücke durch die erfindungsgemäße Keilklammer ermöglicht, dass die Oberflächen der verklammerten Profilstücke - im Unterschied zu einem monolithischen Werkstück - in einer verschiedenen, auch einander ausschließenden Weise behandelt werden. Beispielsweise kann ein Profilstück aus Leichtmetallwerkstoff eine Hämatit-Färbung aufweisen, während das andere Profilstück aus Leichtmetallwerkstoff mit einem Nasslack versehen wurde.

Für die Anwendung der Keilklammer zur Verbindung von Zier- und Funktionsleisten im Automobilbau ist es in logistischer Hinsicht vorteilhaft, dass nur ein einziges Bauteil, bestehend aus zwei mit der erfindungsgemäßen Keilklammer verbundenen Zier- und Funktionsleisten, in das Montagewerk geliefert werden muss. Zudem ist die Montage auf der Karosserie vereinfacht, da nur eine einzige Positionierung des einstückigen Bauteils notwendig ist.

Bei der erfindungsgemäßen Keilklammer sind das erste keilförmige Klammerelement und das zweite keilförmige Klammerelement flächig geformt. Die Klammerelemente können beispielsweise aus Blech gebogen sein. Jedes Klammerelement weist hierbei einen ersten Längsrand auf, der das außenliegende Spreizteil formt. Jedes Klammerelement verfügt ferner über einen zweiten Längsrand, wobei einer der zweiten Längsränder den anderen zweiten Längsrand umgreift, um zu verhindern, dass sich die mit ihren ersten Längsrändern in den Profilstücken verspannten Klammerelemente gegeneinander verdrehen und die Verspannung der Keilklammer unabsichtlich gelöst wird.

An dem ersten Längsrand des ersten Klammerelements und/oder zweiten Klammerelements kann zusätzlich wenigstens eine gerundete Abragung ("Haltebank") ausgebildet sein. Eine solche Haltebank kann in geeigneter Weise geformt sein, um in eine hierzu passende Tasche eines Profistücks zu greifen, wobei eine Verspannung der Keilklammer gegebenenfalls ausschließlich über derartige Haltebänke erfolgt. Das letztere hat den Vorteil, dass sich die auf die Profilstücke ausgeübte Druckkraft der verspannten Klammerelemente auf die Haltebänke konzentriert, wodurch der Halt des Klammerelements in den Profilstücken verbessert wird.

Ebenso kann an dem ersten Längsrand des ersten Klammerelements und/oder zweiten Klammerelements wenigstens eine mit Spitzen versehene Abragung ("Haltekralle") ausgebildet sein. Eine solche Haltekralle kann durch eine höhere Reibung für eine stärkeren Halt der Keilklammer sorgen. Insbesondere kann sich eine derartige Haltekralle beim Fügen der Klammerelemente in das Material der Profilstücke schneiden und auf diese Weise den Halt des Klammerelements noch weiter erhöhen.

Die Klammerelemente der erfindungsgemäßen Keilklammer können ferner mit einem Rastmittel versehen sein. Dieses kann insbesondere in Form einer in eine Riffelung greifenden Rastnase vorliegen, um die Festigkeit der Verbindung zwischen den beiden Profilstücken zu erhöhen. Eine solches Rastmittel soll die beim Verkeilen für einen ausreichenden Halt zu erreichende Endposition der Klammerelemente jedoch nicht beeinträchtigen, sondern nur unterstützend eingreifen.

Weiterhin kann wenigstens ein Klammerelement mit wenigstens einem Kümpel versehen sein, wobei ein derartiger Kümpel bestimmt ist zur Anlage gegen wenigstens eines der Profilstücke zu gelangen.

Vorteilhaft ist ferner, wenn die Klammerelemente jeweils mit einem Loch zum Eingriff einer Fügezange versehen sind, um eine sehr einfache Montage der Keilklammer durch Verkeilen der Klammerelemente mit der Fügezange zu ermöglichen.

Die Erfindung betrifft auch eine Anordnung von an deren stirnseitigen Stoßflächen verklammerten Profilstücken, welche eine wie oben beschriebene Keilklammer umfasst, wobei die Keilklammer mit den Spreizteilen der Klammerelemente in Taschen der beiden Profilstücke verspannt ist, und wobei die stirnseitigen Stoßflächen der beiden Profilstücke durch die Keilklammer überbrückt werden. Bei den Profilstücken handelt es sich vorzugsweise um Zier- und/oder Funktionsstäbe im Automobilbau.

Die Erfindung wird nun anhand eines Ausführungsbeispiels näher erläutert, wobei Bezug auf die beigefügten Zeichnungen genommen wird. Es zeigen
- Fig. 1: eine perspektivische Ansicht des ersten und zweiten Klammerelements gemäß der Erfindung im nichtgefügten Zustand;
- Fig. 2: eine perspektivische Ansicht des ersten und zweiten Klammerelements gemäß der Erfindung im gefügten Zustand;
- Fig. 3: eine weitere perspektivische Ansicht des ersten und zweiten Klammerelements gemäß der Erfindung im gefügten Zustand;
- Fig. 4: eine perspektivische Ansicht des ersten und zweiten Klammerelements gemäß der Erfindung im gefügten Zustand mit Schnitten, in denen die Profilstücke dargestellt sind;
- Fig. 5: vergrößerte Darstellungen der Schnitte von Fig. 4.

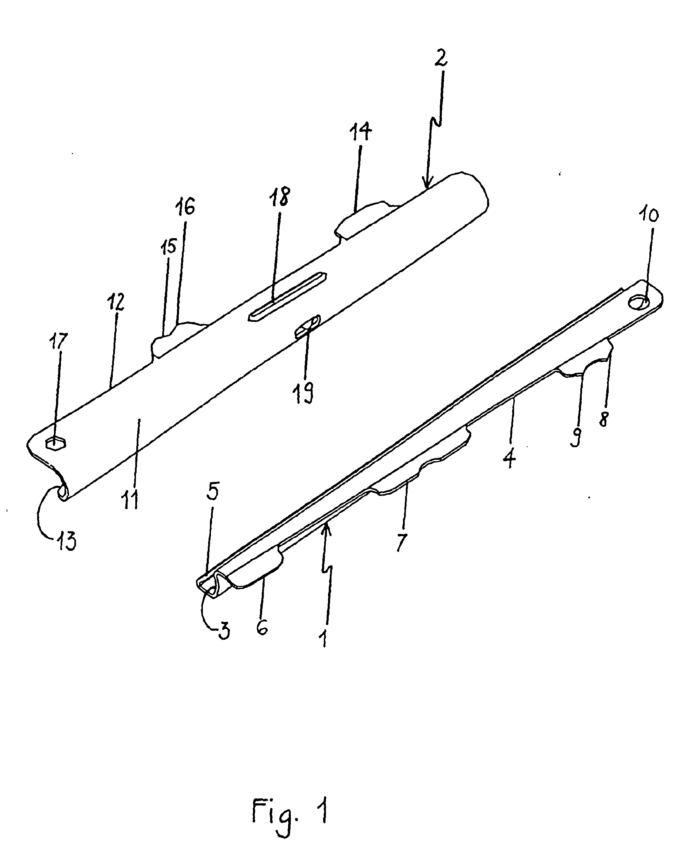

Zunächst sei Fig. 1 betrachtet, worin eine perspektivische Ansicht des ersten Klammerelements 1 und des zweiten Klammerelements 2 gemäß der Erfindung im nichtgefügten Zustand gezeigt ist. Sowohl an dem ersten Klammerelement 1 als auch an dem zweiten Klammerelement 2 ist jeweils ein Keil mit zwei gegenüberliegenden Keilseiten ausgeformt. Beide Klammerelemente bestehen aus gebogenem Blech.

Das erste Klammerelement 1 weist auf einer Keilseite eine konkav gebogene Keilfläche 3 auf. Die Keilfläche 3 geht in einen die gegenüberliegende Keilseite bildenden ersten Längsrand 4 über. Ferner weist die erste Keilklammer 1 einen an seinem Ende umgebogenen zweiten Längsrand 5 auf.

Am ersten Längsrand 4 sind Haltebänke in Form von gerundeten Abragungen 6, 7 und eine Haltekralle in Form einer mit Spitzen 9 versehenen Abragung 8 ausgebildet. Die Haltebänke und die Haltekralle sind bestimmt in Taschen der Profilstücke verspannt zu werden.

Ferner befindet sich in dem ersten Klammerelement 1 ein Loch 10 zum Eingriff einer Fügezange zum Fügen der beiden Klammerelemente an ihren Keilflächen.

Das zweite Klammerelement 2 weist auf einer Keilseite eine konvex gebogene Keilfläche 11 auf. Die Keilfläche 11 geht in einen die gegenüberliegende Keilseite bildenden Längsrand 12 über. Ferner weist das zweite Klammerelement 2 einen zweiten Längsrand 13 auf.

Am ersten Längsrand 12 des zweiten Klammerelements 2 ist eine Haltebank in Form einer gerundeten Abragung 14 und eine Haltekralle in Form einer mit Spitzen 16 versehenen Abragung 15 ausgebildet. Die Haltebank und die Haltekralle sind bestimmt in Taschen der Profilstücke verspannt zu werden.

Ferner befindet sich in dem zweiten Klammerelement 2 ein Loch 17 zum Eingriff einer Fügezange zum Fügen der beiden Klammerelemente an ihren Keilflächen 3, 11.

An dem zweiten Klammerelement 2 ist ferner ein Kümpel 18 ausgebildet, der bestimmt ist, zur Anlage gegen eines oder beide der zu verbindenden Profilstücke zu kommen.

Außerdem ist das zweite Klammerelement 2 mit einer in der Keilfläche 11 angeordneten Rastnase 19 versehen, die Teil eines Rastmittels zum Verrasten beiden Klammerelemente 1, 2 ist. Die Rastnase 19 greift beim Fügen der beiden Keilflächen 3, 11 in eine in der Keilfläche 3 des ersten Klammerelements 1 angeordnete entsprechende Riffelung (nicht dargestellt), und kann dort verrasten, ohne die ausreichende Verkeilung der beiden Keilflächen für eine sichere Verspannung des Keilklammer zu beeinträchtigen.

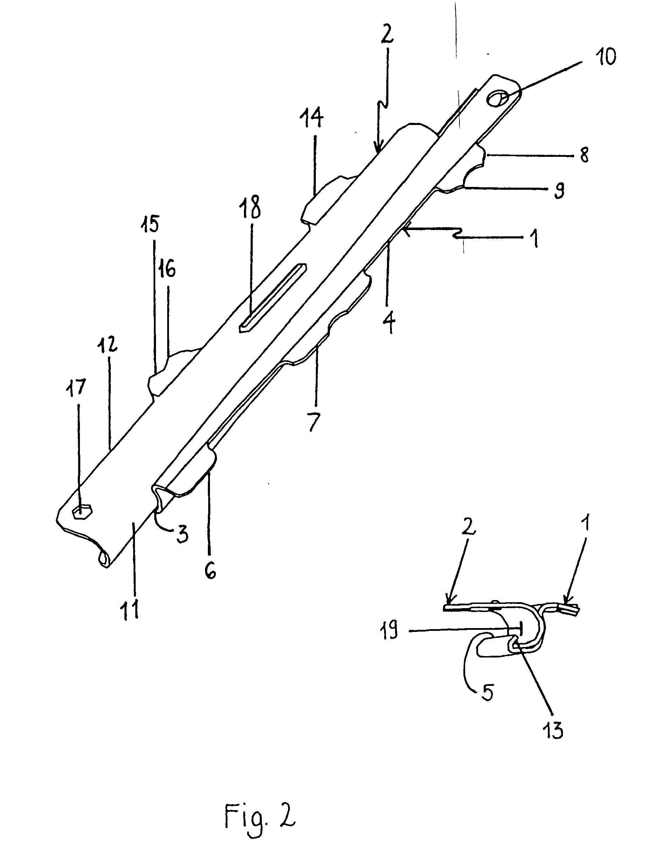

Fig. 2 zeigt eine perspektivische Ansicht des ersten und zweiten Klammerelements gemäß der Erfindung im gefügten Zustand. Die perspektivische Ansicht zeigt eine Ansicht von oben der Klammerelemente, nämlich diejenige Seite der Klammerelemente, welche mit den zu verbindenden Profilstücken verspannt werden soll.

Im gefügten Zustand der beiden Klammerelemente gelangen die konkav gebogene Keilfläche 3 des ersten Klammerelements 1 und die konvex gebogene Keilfläche 11 des zweiten Klammerelements 2 zur Anlage. Die beiden Keilflächen 3, 11 werden zum Fügen der Klammerelemente 1, 2 gefügt. Im gefügten Zustand der Klammerelemente 1, 2 befinden sich die ersten Längsränder 4, 12 der beiden Klammerelemente 1, 2, welche in den Profilstücken verspannt werden sollen, im wesentlichen in einer gleichen Ebene. Durch zunehmendes Fügen der beiden Klammerelemente 1, 2 an ihren Keilflächen 3, 11 wird die Abmessung der Keilklammer quer zur Fügerichtung vergrößert, und die Keilklammer kann so mittels der auf den ersten Längsrändern 4, 12 ausgebildeten Abragungen in den Profilstücken verspannt werden.

Die kleine Abbildung von Fig. 2 zeigt einen Schnitt durch die gefügten Klammerelemente 1, 2 auf Höhe der Rastnase 19. Die Schnittdarstellung zeigt insbesondere, wie der zweite Längsrand 5 des ersten Klammerelements 1 den zweiten Längsrand 13 des zweiten Klammerelements 2 umgreift.

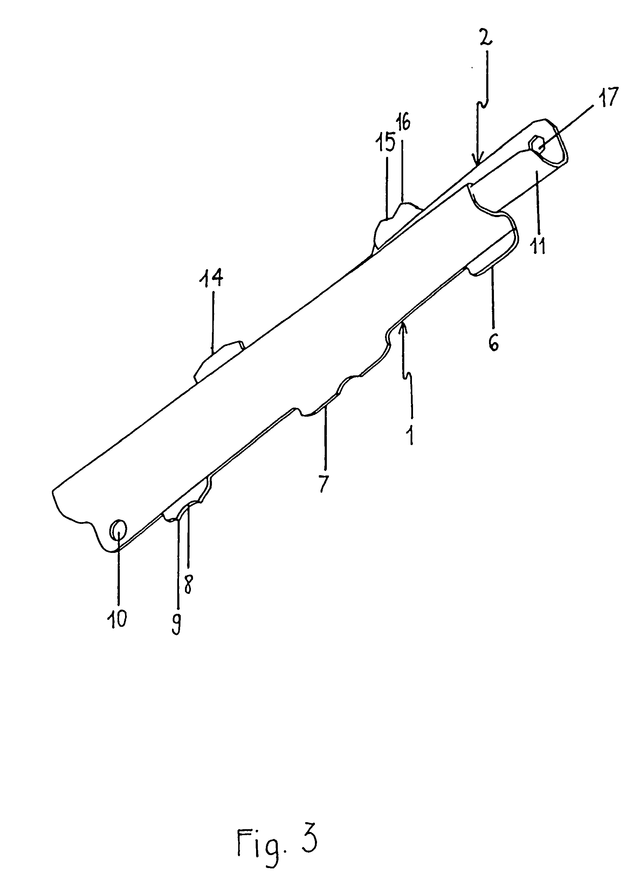

Fig. 3 zeigt zur Veranschaulichung eine weitere perspektivische Ansicht des ersten und zweiten Klammerelements gemäß der Erfindung im gefügten Zustand. Die perspektivische Ansicht zeigt eine Ansicht von unten der Klammerelemente, nämlich diejenige Seite der Klammerelemente, welche von den zu verbindenden Profilstücken abgewandt ist.

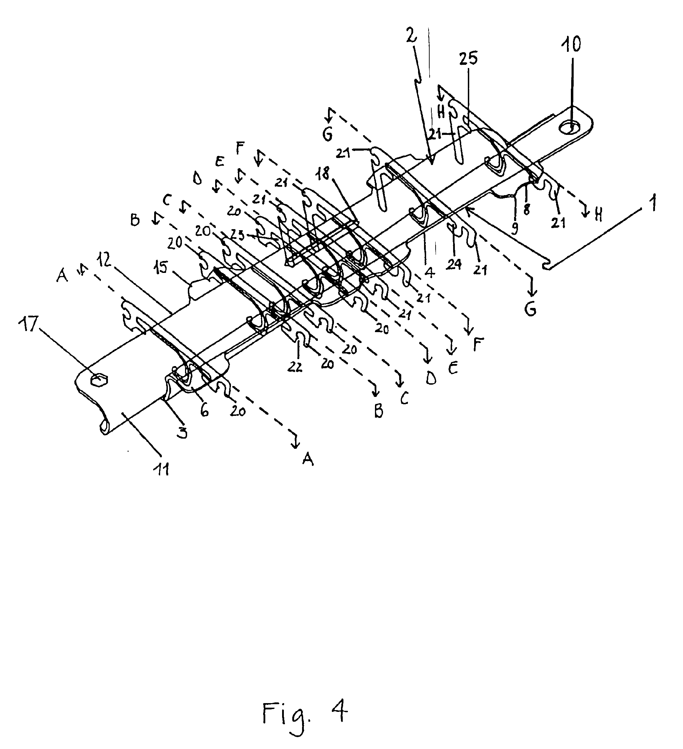

Fig. 4 zeigt eine perspektivische Ansicht des ersten und zweiten Klammerelements gemäß der Erfindung im gefügten Zustand. In den verschiedenen Schnitten von Fig. 4 sind die beiden verbundenen Profilstücke 20, 21 angedeutet, wobei sich die stirnseitigen Stoßflächen der beiden verbundenen Profilstücke zwischen den Schnitten D-D und E-E befinden. Die beiden Profilstücke sind durch die in ihnen verspannte erfindungsgemäße Keilklammer miteinander verbunden, wobei die Keilklammer die stirnseitigen Stoßflächen der Profilstücke überbrückt. Ersichtlich unterscheiden sich die beiden Profilstücke 20, 21 in ihrer geometrischen Form.

Zur Montage werden die beiden Klammerelemente 1, 2 zunächst in den beiden Profilstücken 20, 21 in Stellung gebracht und anschließend an ihren Keilflächen 3, 11 gefügt und in Taschen 22-25 der Profilstücke verspannt. Die Endposition der Klammerelemente ergibt sich aus der Bedingung, dass die Keilklammer in den beiden Profilstücken mit einem genügenden Halt verspannt ist. Beim Verkeilen der beiden Klammerelemente rastet die Rastnase 19 des zweiten Klammerelements 2 in eine zugehörige Riffelung ein. Die Endposition der beiden Klammerelemente im verspannten Zustand wird durch das Rastmittel nicht beeinträchtigt. Zum Verkeilen der beiden Klammerelemente wird praktischerweise eine Fügezange verwendet, welche in die entsprechende Löcher 10, 17 greift.

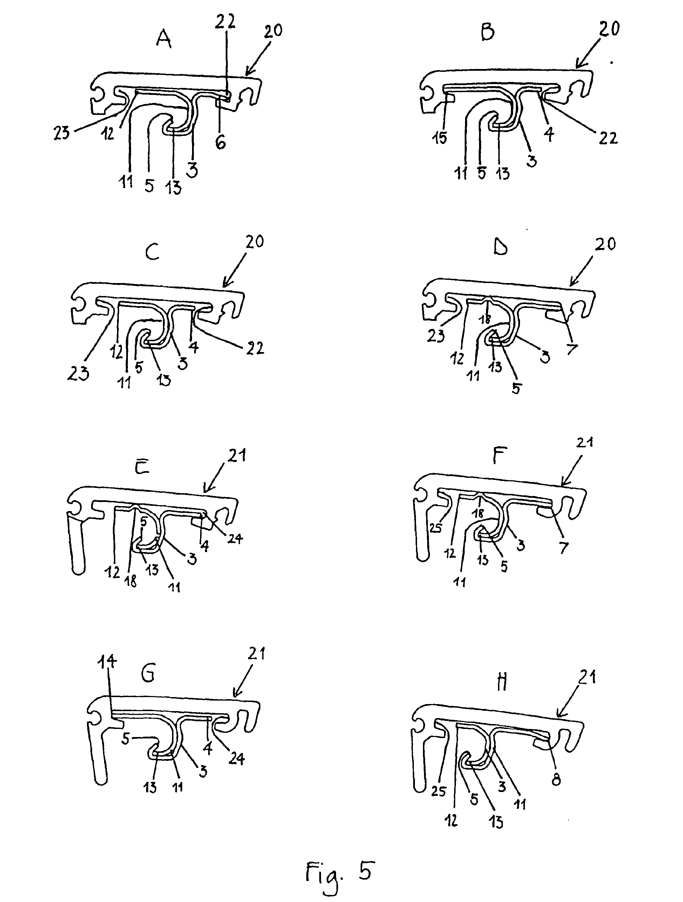

In Fig. 5 sind die Schnitte von Fig. 4 vergrößert dargestellt. Wie insbesondere aus der vergrößerten Darstellung der Schnitte ersichtlich ist, gelangen nur die Haltebänke 6, 7 und die Haltekralle 8 des ersten Klammerelements 1 und die Haltebank 14 und die Haltekralle 15 des zweiten Klammerelements zur Anlage gegen die Profilstücke 20, 21.

Das Profilstück 20 ist auf einer Seite mit einer Tasche 22 zum Eingriff des ersten Klammerelements 1 und auf der anderen Seite mit einer Tasche 23 zum Eingriff des zweiten Klammerelements 2 versehen. Das Profilstück 21 ist auf einer Seite mit einer Tasche 24 zum Eingriff des ersten Klammerelements 1 und auf der anderen Seite mit einer Tasche 25 zum Eingriff des zweiten Klammerelements 2 versehen.

Wie aus Schnitt A-A ersichtlich ist, gelangt die Haltebank 6 des ersten Klammerelements 1 zur Anlage gegen die Tasche 22 des Profilstücks 20. Wie aus den Schnitten D-D, E-E und F-F ersichtlicht ist, gelangt die Haltenase 7 des ersten Klammerelements 1 zur Anlage gegen die Tasche 22 des Profilstücks 20, wie auch zur Anlage gegen die Tasche 24 des Profilstücks 21. Wie aus den Schnitten B-B und G-G ersichtlich ist, gelangt die Haltekralle 16 zur Anlage gegen die Tasche 23 des ersten Klammerelements 1, während die Haltebank 14 zur Anlage gegen die Tasche 25 des zweiten Klammerelements 21 gelangt. Hierdurch wird eine zweiseitige Verspannung der Keilklammer in den beiden Profilstücken ermöglicht. Insbesondere ist es vorteilhaft, dass die Haltebank 7 des ersten Klammerelements zur gleichzeitigen Anlage gegen beide Profilstücke gelangt, was dazu beiträgt eine Spaltbildung zwischen den beiden Profilen zu vermeiden.

## Patentansprüche

1. Keilklammer zur Verbindung von zwei Profilstücken (20, 21) an deren stirnseitigen Stoßflächen, bestehend aus einem ersten Klammerelement (1) mit einer Keilfläche (3) und einem gegenüberliegenden Spreizteil (4) und einem damit zu fügenden zweiten Klammerelement (2) mit einer Keilfläche (11) und einem gegenüberliegenden Spreizteil (12), wobei die beiden Keilflächen einander zugewandt sind, ineinander passen und miteinander fügbar sind, und die Klammerelemente durch zunehmendes Fügen ihrer Keilflächen mittels ihrer Spreizteile in Taschen der beiden zu verbindenden Profilstücken unter Überbrückung der stirnseitigen Stoßflächen der Profilstücke verspannbar sind, **dadurch gekennzeichnet,**
**dass** das erste Klammerelement (1) und das zweite Klammerelement (2) flächig geformt sind, wobei die beiden Klammerelemente jeweils einen das Spreizteil formenden ersten Längsrand (4, 12) aufweisen, und wobei die beiden Klammerelemente jeweils einen zweiten Längsrand (5, 13) aufweisen, derart dass ein zweiter Längsrand (5) den anderen zweiten Längsrand (13) umgreift.

2. Keilklammer nach Anspruch 1,
**dadurch gekennzeichnet,**
**dass** an den ersten Längsrändern der Klammerelemente wenigstens eine gerundete Abragung ("Haltebank") (7, 14) ausgebildet ist.

3. Keilklammer nach Anspruch 1,
**dadurch gekennzeichnet,**
**dass** an den ersten Längsrändern der Klammerelemente wenigstens eine mit Spitzen versehene Abragung ("Haltekralle") (8, 15) ausgebildet ist.

4. Keilklammer nach Anspruch 1,
**dadurch gekennzeichnet,**
**dass** die Klammerelemente mit einem Rastmittel, insbesondere in Form einer in eine Riffelung greifenden Rastnase (19), versehen sind.

5. Keilklammer nach Anspruch 1,
**dadurch gekennzeichnet,**
**dass** wenigstens ein Klammerelement wenigstens einen Kümpel (18) zur Anlage gegen wenigstens ein Profilstück aufweist.

6. Keilklammer nach Anspruch 1,
**dadurch gekennzeichnet,**
**dass** das erste Klammerelement und das zweite Klammerelement mit einem Loch (10,17) zum Eingriff einer Fügezange versehen sind

7. Anordnung von Profilstücken, umfassend eine Keilklammer nach einem der vorhergehenden Ansprüche.

8. Anordnung nach Anspruch 7, bei welcher die Profilstücke Zier- und/oder Funktionsstäbe im Automobilbau sind.

## Claims

1. Wedge clamp for connecting two profile pieces (20, 21) on their contact surfaces on the face side, consisting of a first clamp element (1) with a wedge surface (3) and a spreader part (4) opposite, and a second clamp element (2) to be joined to this with a wedge surface (11) and a spreader part (12) opposite, whereby the two wedge surfaces are turned to face one another, pass into one another, and can be joined to one another, and the clamp elements can be tensioned by increased joining of their wedge surfaces by means of their spreader parts in pockets of the two profile parts which are to be connected, with bridging of the face-side contact surfaces, **characterised in that**:
The first clamp element (1) and the second clamp element (2) are flat in shape, whereby the two clamp elements in each case exhibit a first longitudinal edge (4, 12) forming the spreader part, and whereby the two clamp elements in each case exhibit a second longitudinal edge (5, 13), in such a way that a second longitudinal edge (5) engages around the other second longitudinal edge (13).

2. Wedge clamp according to Claim 1,
**characterised in that**
at the first longitudinal edges of the clamp elements at least one rounded projection ("retaining lip") (7, 14) is formed.

3. Wedge clamp according to Claim 1,
**characterised in that**
at the first longitudinal edges of the clamp elements a projection provided with tips ("retaining claw") (8, 15) is formed.

4. Wedge clamp according to Claim 1,
**characterised in that**
the clamp elements are provided with a ratchet engagement mechanism, in particular in the form of a ratchet engagement nose (19) engaging in a serration.

5. Wedge clamp according to Claim 1,
**characterised in that**
at least one clamp element exhibits at least one dishing point (18) for contact against at least one profile piece.

6. Wedge clamp according to Claim 1,
**characterised in that**
the first clamp element and the second clamp element are provided with a hole (10, 17) for engaging a joint gripper or collet.

7. Arrangement of profile pieces, comprising a wedge clamp according to one of the foregoing claims.

8. Arrangement according to Claim 7, with which the profile pieces are decorative and/or functional rods or bars in automobile manufacture.

## Revendications

1. Attache cunéiforme destinée à relier deux pièces profilées (20, 21) au niveau de leurs faces de jonction frontales, ladite attache étant constituée d'un premier élément d'attache (1) présentant une face cunéiforme (3) et une partie élargie opposée (4) et d'un deuxième élément d'attache (2) s'adaptant au premier élément d'attache et présentant une face cunéiforme (11) et une partie élargie opposée (12), les deux faces cunéiformes étant dirigées l'une vers l'autre, s'adaptant l'une dans l'autre et pouvant être assemblées l'une à l'autre, et les éléments d'attache pouvant être serrés, par un assemblage progressif de leurs faces cunéiformes, au moyen de leurs parties étalées dans des poches des deux pièces profilées à relier en pontant les faces de jonction frontales des pièces profilées,
**caractérisée en ce que** le premier élément d'attache (1) et le deuxième élément d'attache (2) sont conformés avec une faible épaisseur, les deux éléments d'attache comportant chacun un premier bord longitudinal (4, 12) formant la partie élargie, et les deux éléments d'attache comportant chacun un deuxième bord longitudinal (4, 13) de sorte qu'un deuxième bord longitudinal (5) enveloppe l'autre deuxième bord longitudinal (13).

2. Attache cunéiforme selon la revendication 1, **caractérisée en ce que** au moins une saillie arrondie (« bande de retenue ») (7, 14) est conformée au niveau des premiers bords longitudinaux des éléments d'attache.

3. Attache cunéiforme selon la revendication 1, **caractérisée en ce que** au moins une saillie à pointes (« griffe de retenue ») (8, 15) est conformée au niveau des premiers bords longitudinaux des éléments d'attache.

4. Attache selon la revendication 1, **caractérisée en ce que** les éléments d'attache sont dotés d'un moyen d'encliquetage, se présentant notamment sous la forme d'un ergot d'encliquetage (19) s'engageant dans une cannelure.

5. Attache selon la revendication 1, **caractérisée en ce que** au moins un élément d'attache comporte au moins un élément embouti destiné à porter contre au moins une pièce profilée.

6. Attache cunéiforme selon la revendication 1, **caractérisée en ce que** le premier élément d'attache et le deuxième élément d'attache sont dotés d'un trou (10, 17) destiné à s'engager avec une griffe de jonction.

7. Agencement de pièces profilées, comportant une attache cunéiforme selon l'une des revendications précédentes.

8. Agencement selon la revendication 7, dans lequel les pièces profilées sont des baguettes décoratives ou fonctionnelles dans le domaine de la construction automobile.
